# EUROPEAN PATENT APPLICATION

(11) **EP 4 016 928 A1**
(43) Date of publication of application: **22.06.2022**
(21) Application number: 19944261.7
(22) Date of filing: 12.10.2019
(51) Int. Cl.: H04L 12/24

(54) **LAYER 2 LEASED LINE NETWORK SYSTEM, CONFIGURATION METHOD, AND DEVICE**

(30) Priority: 04.09.2019 CN 201910831989
(71) Applicant: Xiamen Wangsu Co., Ltd., Xiamen, Fujian 361000 (CN)
(72) Inventor: CHEN, Kailin, Xiamen, Fujian 361000 (CN); LIN, Minghuang, Xiamen, Fujian 361000 (CN)
(74) Representative: De Arpe Tejero, Manuel
(86) International application number: PCT/CN2019/110771
(87) International publication number: WO 2021/042445

(57) **Abstract**

The present disclosure discloses a two-layer private line network system, a configuration method, and a device. The two-layer private line network system includes a system switch and a POP server connected to each other. The system switch is configured to receive a data packet from a customer service server, add an outer-layer virtual local area network (VLAN) identifier to the data packet, and send the data packet carrying the outer-layer VLAN identifier to the POP server. The POP server is configured to strip off the outer-layer VLAN identifier to restore the data packet sent by the customer service server, and send the restored data packet to another POP server through a two-layer tunnel. According to the technical solutions provided by the present disclosure, costs for construction of a two-layer private line network can be reduced, and construction efficiency is improved.

## Description

### TECHNICAL FIELD

The present disclosure relates to the field of Internet technology, and more particularly, to a two-layer private line network system, a configuration method, and a device.

### BACKGROUND

At present, the same enterprise may deploy data centers at different geographical locations, and different services provided by these data centers generally need to communicate with each other. Therefore, existing enterprises generally need to create a two-layer private line network between different geographical locations.

Lines in the two-layer private line network may be virtual lines constructed by means of intermediate network devices and tunnel technologies. Logically, devices at two ends of the virtual line are directly connected, which is equivalent to connecting two devices by means of one physical network cable. In this way, to transmit data packets through a two-layer private line network, there is no need to construct a network that can forward multicast packets by means of a dynamic multicast routing protocol like a three-layer network. However, when constructing the two-layer private line network, generally it is required to consume considerable economic costs, and it is required a relatively long construction period. Therefore, currently there is an urgent need for a method for constructing a two-layer private line network which is low in cost and short in construction period.

### SUMMARY

An objective of the present disclosure is to provide a two-layer private line network system, a configuration method and a device, which can reduce costs for construction of a two-layer private line network and improve construction efficiency.

To achieve the above objective, an aspect of the present disclosure provides a two-layer private line network system. The two-layer private line network system includes a system switch and a point of presence (POP) server connected to each other. The system switch is configured to receive a data packet from a customer service server, and add an outer-layer virtual local area network (VLAN) identifier to the data packet, wherein the outer-layer VLAN identifier is configured to represent a customer corresponding to the data packet. On the system switch, a target port connected to the POP server is configured with the outer-layer VLAN identifier, and the target port is configured as a port type of reserving the outer-layer VLAN identifier, such that the system switch sends the data packet carrying the outer-layer VLAN identifier to the POP server through the target port. The POP server is configured to receive the data packet carrying the outer-layer VLAN identifier, and strip off the outer-layer VLAN identifier to restore the data packet sent by the customer service server. The POP server is connected to another POP server through a pre-created two-layer tunnel, and send the restored data packet to the other POP server through the two-layer tunnel.

To achieve the above objective, another aspect of the present disclosure also provides a method for configuring a two-layer private line network, the method being applied to a system switch, wherein the system switch is connected to a POP server. The method includes: receiving, by the system switch, a data packet from a customer service server, and adding an outer-layer VLAN identifier to the data packet, the outer-layer VLAN identifier being configured to represent a customer corresponding to the data packet; and on the system switch, providing a target port connected to the POP server with the outer-layer VLAN identifier, wherein the target port is configured as a port type of reserving the outer-layer VLAN identifier, such that the system switch sends the data packet carrying the outer-layer VLAN identifier to the POP server through the target port.

To achieve the above objective, yet another aspect of the present disclosure also provides a system switch, which includes a processor and a memory, wherein the memory is configured to store a computer program, and the computer program is executable by the processor, whereby the above method for configuring a two-layer private line network is implemented.

To achieve the above objective, still another aspect of the present disclosure also provides a method for configuring a two-layer private line network, the method being applied to a POP server, wherein the POP server is connected to a system switch. The method includes: pre-creating, in the POP server, a first interface configured for stripping the outer-layer VLAN identifier off and a second interface configured for connecting a two-layer tunnel, wherein the first interface is configured to bridge with the second interface; receiving, by means of the first interface, a data packet carrying an outer-layer VLAN identifier sent from the system switch, and stripping the outer-layer VLAN identifier off to restore a data packet sent by a customer service server; and sending, by means of the second interface, the restored data packet to another POP server through the two-layer tunnel.

To achieve the above objective, still another aspect of the present disclosure also provides a POP server, which includes a processor and a memory, wherein the memory is configured to store a computer program, and the computer program is executable by the processor, whereby the above method for configuring a two-layer private line network is implemented.

As can be seen from the above technical solutions provided by the present disclosure, a two-layer private line network may be implemented by means of the system switch and the POP server, wherein the two-layer private line network may be configured to transmit data packets between different customer service servers. Specifically, the system switch may receive a data packet from a customer service server, and add an outer-layer VLAN identifier to the data packet, wherein the outer-layer VLAN identifier may be configured to represent a customer corresponding to the data packet, and different customers may have different outer-layer VLAN identifiers. The data packet carrying the outer-layer VLAN identifier may be forwarded to the POP server by the system switch, such that the POP server may thus determine the customer corresponding to the data packet received by means of the outer-layer VLAN identifier. Subsequently, because an Ethernet packet needs to be transmitted in the two-layer tunnel of the two-layer private line network, the POP server may restore the Ethernet packet to be sent by the customer service server by stripping off the outer-layer VLAN identifier, and send the Ethernet packet to another POP server through the pre-created two-layer tunnel. In the configuration process of the above system switch, the target port connected to the POP server may be configured with the above-mentioned outer-layer VLAN identifier. In this way, from a perspective of the system switch, a port connected to the customer service server and the target port connected to the POP server are in the same VLAN, so the data packet sent from the customer service server may finally reach the POP server. In addition, the target port may be configured as a port type of reserving the outer-layer VLAN identifier, such that the data packet forwarded by the system switch may carry the aforementioned outer-layer VLAN identifier. As can be seen from the above, the two-layer private line network provided by the present disclosure has a relatively simple structure, which can shorten a network construction period. In addition, by means of the outer-layer VLAN identifier, traffics of different customers may be forwarded by the system switch and the POP server, which realizes reuse of hardware resources and thus greatly reduces costs for construction of the two-layer private line network.

### BRIEF DESCRIPTION OF THE DRAWINGS

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a first schematic structural diagram of a two-layer private line network system according to an embodiment of the present disclosure;
FIG. 2 is a second schematic structural diagram of the two-layer private line network system according to an embodiment of the present disclosure;
FIG. 3 is a method for configuring a two-layer private line network applied to a system switch according to an embodiment of the present disclosure;
FIG. 4 is a schematic structural diagram of the system switch according to an embodiment of the present disclosure; and
FIG. 5 is a method for configuring a two-layer private line network applied to a POP server according to an embodiment of the present disclosure.

### DETAILED DESCRIPTION

To make the objectives, technical solutions and advantages of the present disclosure clearer, the embodiments of the present disclosure will be further described below in detail with reference to the accompanying drawings.

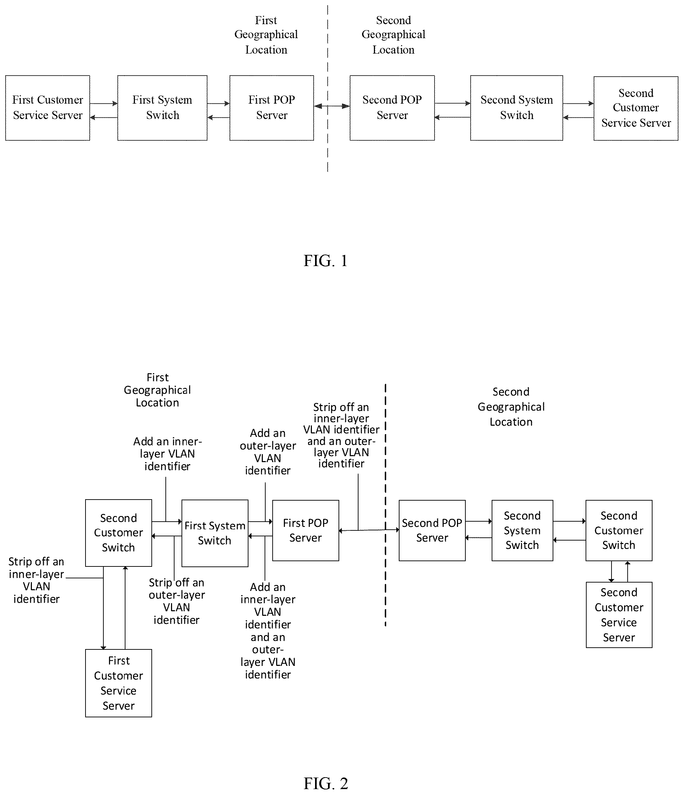

The present disclosure provides a two-layer private line network system. Referring to FIG. 1, the system may include a system switch and a POP server. The two-layer private line network system may be configured to transmit data packets between different customer service servers belonging to the same customer. These customer service servers may be distributed in different cities, or distributed at geographical locations far apart from each other in the same city, and are assigned with IP addresses in the same IP network segment, so bottom-layer private lines or tunnels and so on are transparent to these customer service servers. Logically the customer service server and the switch are directly connected by means of a port, for example, directly connected by means of a network cable, or connected by means of a private line.

As shown in FIG. 1, the two-layer private line network may be a symmetrical structure. A first system switch and a first POP server may be deployed at a first geographical location, and a second system switch and a second POP server may be deployed at a second geographical location. The first geographical location is a geographical location where the first customer service server is positioned, and the second geographical location is a geographical location where the second customer service server is positioned. Both the two customer service servers belong to the same customer. For example, the two customer service servers may be two customer service servers positioned in different locations belonging to the same enterprise tenant.

In this embodiment, in the process of sending a data packet from the first customer service server to the second customer service server, the first system switch may receive the data packet from the first customer service server. In practical applications, the first system switch may be connected to a plurality of customer service servers belonging to the first geographical location. Therefore, to distinguish data packets sent from different customer service servers, the first system switch may add an outer-layer Virtual Local Area Network (VLAN) identifier to the data packet received, wherein the outer-layer VLAN identifier may be configured to represent a customer corresponding to the data packet currently received.

In practical applications, a QinQ function (also known as Stacked VLAN or Double VLAN function) may be provided in advance on a port connected to the first customer service server on the first system switch, and different outer-layer VLAN identifiers may be assigned in advance to different customer service servers on the first system switch. In this way, after the port receives a data packet from the first customer service server, an outer-layer VLAN identifier matching the first customer service server may be added to the data packet.

In this embodiment, to enable the first system switch to forward the data packet from the first customer service server to the first POP server connected to the first system switch, a target port connected to the first POP server may be configured with a VLAN ID the same as the above-mentioned outer-layer VLAN identifier. In this way, from the perspective of the first system switch, the port connected to the first customer service server and the target port connected to the first POP server are in the same VLAN, so the data packet sent from the first customer service server may finally be sent to the first POP server for processing.

In addition, the first system switch may also configure the aforementioned target port as a port type that can retain the outer-layer VLAN identifier, for example, a trunk type. In this way, the first system switch may send the data packet carrying the outer-layer VLAN identifier to the first POP server through the target port.

In this embodiment, after receiving the data packet carrying the outer-layer VLAN identifier, the first POP server may determine a customer corresponding to the current data packet by recognizing the outer-layer VLAN identifier, to determine a two-layer tunnel for transmitting the data packet. In this way, the POP server may assign corresponding two-layer tunnels to different customers based on different outer-layer VLAN identifiers, which not only can realize data isolation between different customers and support multi-customer scenarios, but also can realize reuse of the POP server and thus save hardware costs.

In practical applications, the first POP server and the second POP server may be connected to each other through the two-layer tunnel, and the data packet transmitted over the two-layer tunnel generally need to be a pure Ethernet packet. In view of this, before the first POP server sends the current data packet, the outer-layer VLAN identifier carried in the data packet needs to be stripped off to restore an Ethernet packet to be sent by the first customer service server. Finally, the Ethernet packet may be sent to the second POP server through the pre-created two-layer tunnel.

In one embodiment, a first interface corresponding to the outer-layer VLAN identifier may be pre-created in the first POP server, to receive the data packet corresponding to the outer-layer VLAN identifier and to strip off the outer-layer VLAN identifier. In practical applications, the first interface may be created in a variety of ways. For example, a multi-layer nested VLAN interface may be created in a Linux system, and the created multi-layer nested VLAN interface may be used as the above-mentioned first interface.

Specifically, reference is made to the following application example:
ip link add eth0.200 link eth0 type vlan id 200
where eth0 may represent a physical network adapter configured to receive a data packet. Based on this physical network adapter, a virtual network adapter eth0.200 may be created for a data packet whose outer-layer VLAN identifier is 200, that is, the first interface configured to receive the data packet, which is dedicated to receiving the data packet whose outer-layer VLAN identifier is 200. The virtual network adapter may be provided with an ID the same as the outer-layer VLAN identifier. In this way, the virtual network adapter titled eth0.200 is obtained.

After the above-mentioned physical network adapter eth0 receives the data packet carrying the outer-layer VLAN identifier, the outer-layer VLAN identifier may be stripped off. After the outer-layer VLAN identifier is determined to be 200, the data packet with its outer-layer VLAN identifier stripped off is sent to the virtual network adapter titled eth0. 200. In this way, stripping of the outer-layer VLAN identifier may be achieved. Meanwhile, the first POP server obtains a mapping relationship between a source MAC address in the data packet and the first interface by means of a self-learning ability of a forwarding database (FDB) table.

Of course, in practical applications, there may be other more ways to achieve the stripping function of the outer-layer VLAN identifier. For example, the stripping of the outer-layer VLAN identifier may be achieved by creating a target bridge using an openswitch (OVS) software or by adding openflow to the OVS bridge and executing strip_vlan (removing the VLAN identifier in the data packet) or similar functional actions by means of the added openflow.

In this embodiment, there may be a variety of implementation modes for the first POP server to create the two-layer tunnel for connecting the first POP server to the second POP server. For example, the first POP server may create a VXLAN tunnel using a VXLAN interface in the Linux system, wherein the VXLAN tunnel may be used as the created two-layer tunnel. For another example, a VXLAN interface may be respectively created on the first POP server and the second POP server by means of the OVS, and a transmission link formed by the two interfaces may be used as the two-layer tunnel. The VXLAN interface created in the above-mentioned Linux system or the VXLAN interface in the OVS may be used as a second interface in the first POP server for connecting the two-layer tunnel.

In this embodiment, to enable the data packet received by the first POP server to be sent to the second POP server through the two-layer tunnel, the first interface and the second interface need to be bridged. Specifically, the first POP server may create a target bridge, and use the first interface and the second interface as two ports of the target bridge, to achieve the process of bridging the two interfaces. In practical applications, the target bridge may be created by means of the Linux system or OVS or in other ways, which is not limited in the present disclosure. Similarly, after the data packet is forwarded by means of the second interface, the first POP server may obtain a mapping relationship between the source MAC address in the data packet and the second interface by means of the self-learning ability of the FDB table.

In one embodiment of the present disclosure, it is considered that when two-layer private lines need to be created for a plurality of customer service servers in different network segments corresponding to the same customer, or there are a plurality of customer service servers of different customers in a first geographical area, a plurality of communication lines need to be created between these customer service servers and the first system switch, which undoubtedly increase burden of the first system switch. In view of this, one or more customer switches may be added between the first system switch and the customer service server. For example, at least one customer switch may be additionally provided for each customer. These customer switches may be connected to the customer service server and the first system switch respectively, wherein logically the customer switches and the first switch are directly connected by means of a port, for example, directly connected by means of a network cable, or connected by means of a private line.

Specifically, referring to FIG. 2, the solutions of the present disclosure are illustrated by taking one customer switch as an example. The first customer switch may receive data packets sent from customer service servers. In actual applications, different customer service servers may be divided into different network segments, to distinguish the data packets sent from the customer service servers in different network segments, the first customer switch may add an inner-layer VLAN identifier to a data packet received, and then send this data packet to the first system switch, wherein the inner-layer VLAN identifier may be configured to represent the network segment corresponding to the customer service server sending the data packet.

After the data packet carrying the inner-layer VLAN identifier is received by the first system switch, an outer-layer VLAN identifier may be further added to the data packet in the above-mentioned manner. It is to be noted that in this case, the first system switch may assign different outer-layer VLAN identifiers to customer switches connected to each other, and add an outer-layer VLAN identifier matching a customer switch to a data packet sent from the customer switch. In this way, by means of combination of the inner-layer VLAN identifier and the outer-layer VLAN identifier, a line channel for transmitting a data packet can be uniquely determined, including the interface on the POP server and the corresponding two-layer tunnel.

As shown in FIG. 2, the data packet sent from the first customer service server is a pure Ethernet packet, wherein neither an inner-layer VLAN identifier nor an outer-layer VLAN identifier is carried in the Ethernet packet. After this pure Ethernet packet is processed by the first customer switch, an inner-layer VLAN identifier whose ID is 400 may be added to this pure Ethernet packet. After this pure Ethernet packet is processed by the first system switch, an outer-layer VLAN identifier whose ID is 200 may be further added to this pure Ethernet packet.

Of course, when customer service servers connected to the first customer switch are all in the same VLAN, the first customer switch does not need to add the inner-layer VLAN identifier, such that the first customer switch may directly send the data packet from the customer service server to the first system switch.

In one embodiment, when the data packet forwarded by the first system switch carries both the inner-layer VLAN identifier and the outer-layer VLAN identifier, the first POP server also needs to have the function of stripping off the inner-layer VLAN identifier and the outer-layer VLAN identifier. Specifically, the first POP server may still add openflow to OVS in the above-mentioned manner, and execute strip_vlan or similar actions by means of the openflow added, to achieve the function of stripping off the inner-layer VLAN identifier and the outer-layer VLAN identifier. In addition, the first POP server may also create a multi-layer nested VLAN interface in the Linux system, and achieve the function of stripping off the inner-layer VLAN identifier and the outer-layer VLAN identifier by means of the multi-layer nested VLAN interface created. Specifically, a detailed description is made with reference to the following application examples:
ip link add eth0.200 link eth0 type vlan id 200
ip link add eth0.200.400 link eth0.200 type vlan id 400

As can be seen, a first virtual network adapter eth0.200 (i.e., a first virtual network interface configured to receive the data packet) may be created for the data packet carrying an outer-layer VLAN identifier 200 based on the physical network adapter eth0 according to the outer-layer VLAN identifier 200 to be stripped off. A second virtual network adapter eth0.200.400 (i.e., a second virtual network interface configured to receive the data packet) may be created for the data packet carrying an inner-layer VLAN identifier 400 by means of the first virtual network adapter eth0.200 according to the inner-layer VLAN identifier 400 to be stripped off.

In this way, after the data packet received by the physical network adapter is stripped off its outer-layer VLAN identifier, it may be received by the first virtual network adapter. After this data packet received by the first virtual network adapter is stripped off its inner-layer VLAN identifier it may be received by the second virtual network adapter. In this way, stripping off the inner-layer VLAN identifier and the outer-layer VLAN identifier is achieved. Meanwhile, after the virtual network interface of the first POP server receives the data packet, a mapping relationship between a source MAC address in the data packet and each virtual network interface may be obtained by means of a self-learning ability of the FDB table.

As can be seen from the above, the first POP server may receive the data packet carrying the outer-layer VLAN identifier and the inner-layer VLAN identifier, and strip off the outer-layer VLAN identifier and the inner-layer VLAN identifier carried. Finally, an Ethernet packet sent by the customer service server may be restored, and the Ethernet packet is sent to another POP server through the two-layer tunnel. In addition, the virtual network interface created in the first POP server may also have the function of stripping off the inner-layer VLAN identifier, and the second virtual network interface still needs to be bridged with the above-mentioned second interface, such that the data packet of the customer service server can be transmitted through the two-layer tunnel.

In this embodiment, because the two-layer network system has a symmetrical structure, when processing the data packet sent from the second customer service server, each device deployed at the second geographical location in FIG. 1 and FIG. 2 may correspond to each device at the first geographical location in terms of functions implemented, and thus a detailed description is omitted here. It is to be noted that although the functions implemented by the devices at the first geographical location and the devices at the second geographical location are the same, it does not mean that these devices need to adopt exactly the same configuration. For example, the inner-layer VLAN identifier added by the first customer switch may be different from the inner-layer VLAN identifier added by the second customer switch, and the outer-layer VLAN identifier added by the first system switch may be different from the outer-layer VLAN identifier added by the second system switch.

When the first POP server receives a data packet sent from the second POP server, the data packet is a pure Ethernet packet. At this moment, the first POP server may perform an operation opposite to the above process, add the outer-layer VLAN identifier to the data packet received, and send the data packet carrying the outer-layer VLAN identifier added to the first system switch. Subsequently, the first system switch may strip off the outer-layer VLAN identifier from the data packet received, and then feed the data packet carrying the outer-layer VLAN identifier striped off back to the first customer service server.

If a first customer switch exists between the first system switch and the first customer service server, the first POP server may continue to add the outer-layer VLAN identifier after adding the inner-layer VLAN identifier to the data packet received, and send the data packet carrying the outer-layer VLAN identifier and the inner-layer VLAN identifier added to the first system switch. In this way, after stripping off the outer-layer VLAN identifier, the first system switch may send the data packet carrying the inner-layer VLAN identifier to the first customer switch. After the first customer switch receives the data packet with the outer-layer VLAN identifier stripped off, when the data packet carries the inner-layer VLAN identifier, the first customer switch may strip off the inner-layer VLAN identifier from the data packet received, and then provide the Ethernet packet restored to the first customer service server.

Reference may be made to the description of the foregoing embodiments for specific implementation manners of adding and stripping off the VLAN identifiers, i.e., implemented by means of the Linux system or OVS or other similar manners, and thus a detailed description is omitted here. In a practical application, an interface for forwarding a data packet may be determined based on the FDB table, and a corresponding VLAN identifier may be added to the data packet when the data packet reaches the corresponding interface. In this way, the corresponding identifier can be added to the data packet, also it can be ensured that a transmission path for sending the data packet to the customer service server is the same as a transmission path for sending the data packet from the customer service server, such that the data packet can successfully reach the customer service server.

It is to be noted that after the second POP server receives the Ethernet packet sent from the first POP server, a manner of processing the Ethernet packet may be similar to the above-mentioned manner. For example, in FIG. 2, the second POP server may add an outer-layer VLAN identifier whose ID is 300 and an inner-layer VLAN identifier whose ID is 500 to the Ethernet packet received, the second system switch may strip off the outer-layer VLAN identifier whose ID is 300, and the second customer switch may strip off the inner-layer VLAN identifier whose ID is 500.

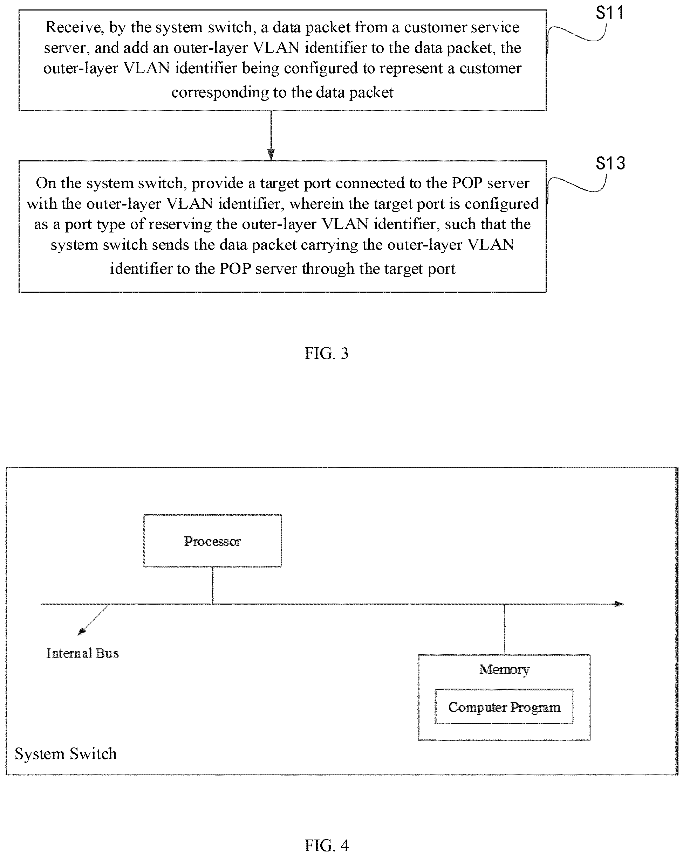

The present disclosure also provides a method for configuring a two-layer private line network. The method may be applied to a system switch connected to a POP server. Referring to FIG. 3, the method includes the following steps.
S11: receiving, by the system switch, a data packet from a customer service server, and adding an outer-layer VLAN identifier to the data packet, the outer-layer VLAN identifier being configured to represent a customer corresponding to the data packet; and
S13: on the system switch, providing a target port connected to the POP server with the outer-layer VLAN identifier, wherein the target port is configured as a port type of reserving the outer-layer VLAN identifier, such that the system switch sends the data packet carrying the outer-layer VLAN identifier to the POP server through the target port.

In one embodiment, the system switch is connected to the customer service server by means of a customer switch. Accordingly, adding an outer-layer VLAN identifier to the data packet includes:
adding, by the system switch according to different outer-layer VLAN identifiers assigned to the customer switches connected to each other in advance, an outer-layer VLAN identifier matching a customer switch to the data packet sent from the customer switch.

In one embodiment, the method also includes:
receiving, by the system switch, the data packet sent from the POP server with the outer-layer VLAN identifier added, stripping the outer-layer VLAN identifier off from the data packet received, and feeding the data packet with the outer-layer VLAN identifier striped off back to the customer service server or the customer switches connected to each other.

The present disclosure also provides a system switch. Referring to FIG. 4, the system switch includes a processor and a memory. The memory is configured to store a computer program, and the computer program is executable by the processor, whereby the above method for configuring a two-layer private line network is implemented, wherein the method is applied to the system switch.

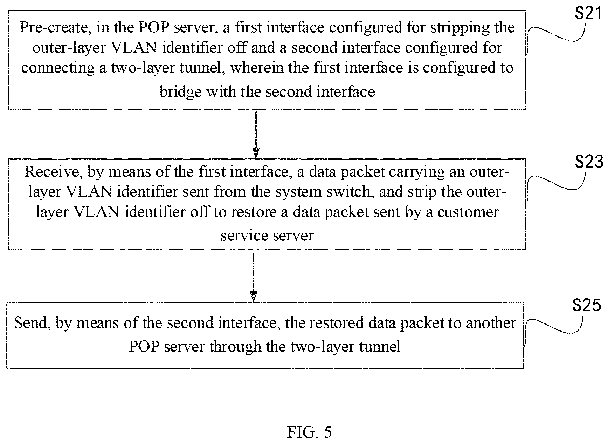

The present disclosure also provides a method for configuring a two-layer private line network. The method is applied to a POP server, wherein the POP server is connected to a system switch. Referring to FIG. 5, the method includes the following steps.

S21: pre-creating, in the POP server, a first interface configured for stripping the outer-layer VLAN identifier off and a second interface configured for connecting a two-layer tunnel, wherein the first interface is configured to bridge with the second interface.

S23: receiving, by means of the first interface, a data packet carrying an outer-layer VLAN identifier sent from the system switch, and stripping the outer-layer VLAN identifier off to restore a data packet sent by a customer service server.

S25: sending, by means of the second interface, the restored data packet to another POP server through the two-layer tunnel.

In one embodiment, bridging the first interface and the second interface includes:
creating a target bridge by the POP server, and taking the first interface and the second interface as two ports of the target bridge.

In one embodiment, the first interface is also configured to strip off the inner-layer VLAN identifier; and the first interface is created by:
creating, according to an outer-layer VLAN identifier to be stripped off, a first virtual network adapter carrying the outer-layer VLAN identifier based on a physical network adapter, and creating, according to an inner-layer VLAN identifier to be stripped off, a second virtual network adapter carrying the inner-layer VLAN identifier based on the first virtual network adapter.

After a data packet received by the physical network adapter is stripped off the outer-layer VLAN identifier, the data packet with the outer-layer VLAN identifier stripped off is received by the first virtual network adapter. After the data packet received by the first virtual network adapter is stripped off the inner-layer VLAN identifier, the data packet with the inner-layer VLAN identifier stripped off is received by the second virtual network adapter.

In one embodiment, the data packet sent from the system switch also carries an inner-layer VLAN identifier. Accordingly, the method also includes:
receiving, by the POP server, the data packet carrying the outer-layer VLAN identifier and the inner-layer VLAN identifier, and stripping off the outer-layer VLAN identifier and the inner-layer VLAN identifier by means of the first interface to restore the data packet sent by the customer service server.

In one embodiment, the method also includes:
receiving, by the POP server, a data packet sent from the other POP server, and adding an outer-layer VLAN identifier to the data packet received, or adding an outer-layer VLAN identifier and an inner-layer VLAN identifier, and sending the data packet with the VLAN identifiers added to the system switch.

The present disclosure also provides a POP server, which includes a processor and a memory. The memory is configured to store a computer program, and the computer program is executable by the processor, whereby the above method for configuring a two-layer private line network is implemented, wherein the method is applied to the POP server.

As can be seen from the above technical solutions provided by the present disclosure, a two-layer private line network may be implemented by means of the system switch and the POP server, wherein the two-layer private line network may be configured to transmit data packets between different customer service servers.

Specifically, the system switch may receive a data packet from a customer service server, and add an outer-layer VLAN identifier to the data packet, wherein the outer-layer VLAN identifier may be configured to represent a customer corresponding to the data packet, and different customers may have different outer-layer VLAN identifiers. The data packet carrying the outer-layer VLAN identifier may be forwarded to the POP server by the system switch, such that the POP server may thus determine the customer corresponding to the data packet received by means of the outer-layer VLAN identifier.

Subsequently, because an Ethernet packet needs to be transmitted in the two-layer tunnel of the two-layer private line network, the POP server may restore the Ethernet packet to be sent by the customer service server by stripping off the outer-layer VLAN identifier, and send the Ethernet packet to another POP server through the pre-created two-layer tunnel.

In the configuration process of the above system switch, the target port connected to the POP server may be configured with the above-mentioned outer-layer VLAN identifier. In this way, from a perspective of the system switch, a port connected to the customer service server and the target port connected to the POP server are in the same VLAN, so the data packet sent from the customer service server may finally reach the POP server.

In addition, the target port may be configured as a port type of reserving the outer-layer VLAN identifier, such that the data packet forwarded by the system switch may carry the aforementioned outer-layer VLAN identifier.

As can be seen from the above, the two-layer private line network provided by the present disclosure has a relatively simple structure, which can shorten a network construction period.

In addition, by means of the outer-layer VLAN identifier, traffics of different customers may be forwarded by the system switch and the POP server, which realizes reuse of hardware resources and thus greatly reduces costs for construction of the two-layer private line network. Meanwhile, the various hardware devices mentioned above may be equipped with software systems such as a Linux system or an OVS. The process of constructing the two-layer private line network can be simplified based on combination of software and hardware.

The various embodiments in this specification are described in a progressive manner, and the same or similar parts between the various embodiments can be referred to each other, and each embodiment focuses on the differences from other embodiments. In particular, for the method embodiments and the device embodiments, both may be explained with reference to the introduction of the foregoing system embodiments.

It can be known from the foregoing implementations, those skilled in the art may clearly know that various implementations can be implemented by feat of software and necessary general hardware platform, or of course by means of hardware. Based on such an understanding, the foregoing technical solutions in essence or that part of contribution to the prior art may be embodied in the form of software products, which may be stored in computer-readable storage media, such as ROM/RAM, diskettes or optical disks and the like, including some instructions such that it is possible to execute embodiments or methods as recited in some parts of embodiments by a computer device (personal computers or servers, or network device, etc.).

The foregoing descriptions are merely preferred embodiments of the present disclosure, and are not intended to limit the present disclosure. Any modification, equivalent replacement and improvement made within the spirit and principle of the present disclosure shall fall into the protection scope of the present disclosure.

## Claims

1. A two-layer private line network system, comprising a system switch and a point of presence (POP) server connected to each other, wherein:
the system switch is configured to receive a data packet from a customer service server, and add an outer-layer virtual local area network (VLAN) identifier to the data packet, the outer-layer VLAN identifier being configured to represent a customer corresponding to the data packet; on the system switch, a target port connected to the POP server is configured with the outer-layer VLAN identifier, and the target port is configured as a port type of reserving the outer-layer VLAN identifier, such that the system switch sends the data packet carrying the outer-layer VLAN identifier to the POP server through the target port; and
the POP server is configured to receive the data packet carrying the outer-layer VLAN identifier, and strip off the outer-layer VLAN identifier to restore the data packet sent by the customer service server; and the POP server is connected to another POP server through a pre-created two-layer tunnel, and send the restored data packet to the other POP server through the pre-created two-layer tunnel.

2. The two-layer private line network system according to claim 1, further comprising a customer switch, wherein the customer switch is connected to the customer service server and the system switch respectively, the customer switch is configured to receive a data packet sent by the customer service server, and when the customer service server is divided into different network segments, the customer switch adds an inner-layer VLAN identifier to the data packet received, the inner-layer VLAN identifier being configured to represent a network segment corresponding to the data packet received; and the customer switch is further configured to send the data packet carrying the inner-layer VLAN identifier to the system switch.

3. The two-layer private line network system according to claim 2, wherein the system switch is further configured to assign different outer-layer VLAN identifiers to each of the customer switches that connects to the system switch, and add an outer-layer VLAN identifier matching a customer switch to a data packet sent from the customer switch; and the POP server is further configured to receive a data packet carrying an outer-layer VLAN identifier and an inner-layer VLAN identifier, and strip off the outer-layer VLAN identifier and the inner-layer VLAN identifier carried.

4. The two-layer private line network system according to any one of claims 1 to 3, wherein a first interface configured for stripping off the outer-layer VLAN identifier and the inner-layer VLAN identifier and a second interface configured for connecting the two-layer tunnel are pre-created in the POP server, and the first interface is configured to bridge with the second interface.

5. The two-layer private line network system according to claim 4, wherein when the first interface and the second interface are bridged, the POP server creates a target bridge, and takes the first interface and the second interface as two ports of the target bridge.

6. The two-layer private line network system according to claim 4, wherein when creating the first interface, the POP server creates, according to an outer-layer VLAN identifier to be stripped off, a first virtual network adapter carrying the outer-layer VLAN identifier based on a physical adapter, and creates, according to an inner-layer VLAN identifier to be stripped off, a second virtual network adapter carrying the inner-layer VLAN identifier based on the first virtual network adapter; after the data packet received by the physical adapter is stripped off the outer-layer VLAN identifier, the data packet with the outer-layer VLAN identifier stripped off is received by the first virtual network adapter; and after the data packet received by the first virtual network adapter is stripped off the inner-layer VLAN identifier, the data packet with the inner-layer VLAN identifier stripped off is received by the second virtual network adapter.

7. The two-layer private line network system according to claim 1, wherein the POP server is further configured to receive a data packet sent from another POP server, add an outer-layer VLAN identifier to the data packet received from the another POP server, and send the data packet carrying the outer-layer VLAN identifier to the system switch; and after the system switch strips the outer-layer VLAN identifier off from the data packet received from the POP server, the system switch feeds the data packet with the outer-layer VLAN identifier striped off back to the customer service server.

8. The two-layer private line network system according to claim 7, wherein the POP server is further configured to add an inner-layer VLAN identifier to the data packet received, and send the data packet carrying the outer-layer VLAN identifier and the inner-layer VLAN identifier added to the system switch; and
the two-layer private line network system further comprises a customer switch, wherein the customer switch is connected to the customer service server and the system switch respectively, and the customer switch is configured to receive the data packet sent from the system switch with the outer-layer VLAN identifier striped off; and when the data packet received by the customer switch carries the inner-layer VLAN identifier, the customer switch strips the inner-layer VLAN identifier off from the data packet received, and provides the data packet with the inner-layer VLAN identifier striped off to the customer service server.

9. A method for configuring a two-layer private line network, the method being applied to a system switch, wherein the system switch is connected to a POP server, the method comprising:
receiving, by the system switch, a data packet from a customer service server and adding an outer-layer VLAN identifier to the data packet, the outer-layer VLAN identifier being configured to represent a customer corresponding to the data packet; and
configuring , by the system switch, a target port connected to the POP server with the outer-layer VLAN identifier, wherein the target port is configured as a port type of reserving the outer-layer VLAN identifier, such that the system switch sends the data packet carrying the outer-layer VLAN identifier to the POP server through the target port.

10. The method according to claim 9, wherein the system switch is further connected to a customer switch; and accordingly, the adding an outer-layer VLAN identifier to the data packet comprises:
assigning, by the system switch, different outer-layer VLAN identifiers to each of the customer switches that connects to the system switch, and adding an outer-layer VLAN identifier matching a customer switch to a data packet sent from the customer switch.

11. The method according to claim 9, further comprising:
receiving, by the system switch, the data packet sent from the POP server with the outer-layer VLAN identifier added, stripping the outer-layer VLAN identifier off from the data packet received, and feeding the data packet with the outer-layer VLAN identifier striped off back to the customer service server or customer switches connected to each other.

12. A system switch, comprising a processor and a memory, wherein the memory is configured to store a computer program, and the computer program is executable by the processor, whereby the method according to any one of claims 9 to 11 is implemented.

13. A method for configuring a two-layer private line network, wherein the method is applied to a POP server, the POP server being connected to a system switch, and the method comprising:
pre-creating, in the POP server, a first interface configured for stripping the outer-layer VLAN identifier off and a second interface configured for connecting a two-layer tunnel, wherein the first interface is configured to bridge with the second interface;
receiving, by means of the first interface, a data packet carrying an outer-layer VLAN identifier sent from the system switch, and stripping the outer-layer VLAN identifier off to restore a data packet sent by a customer service server; and
sending, by means of the second interface, the restored data packet to another POP server through the two-layer tunnel.

14. The method according to claim 13, wherein bridging the first interface and the second interface comprises:
creating a target bridge by the POP server, and taking the first interface and the second interface as two ports of the target bridge.

15. The method according to claim 13, wherein the first interface is further configured to strip an inner-layer VLAN identifier off; and the first interface is created by:
creating, according to an outer-layer VLAN identifier to be stripped off, a first virtual network adapter carrying the outer-layer VLAN identifier based on a physical network adapter, and creating, according to an inner-layer VLAN identifier to be stripped off, a second virtual network adapter carrying the inner-layer VLAN identifier based on the first virtual network adapter;
wherein after a data packet received by the physical network adapter is stripped off the outer-layer VLAN identifier, the data packet with the outer-layer VLAN identifier stripped off is received by the first virtual network adapter; and after the data packet received by the first virtual network adapter is stripped off the inner-layer VLAN identifier, the data packet with the inner-layer VLAN identifier stripped off is received by the second virtual network adapter.

16. The method according to claim 13, wherein the data packet sent from the system switch further carries an inner-layer VLAN identifier; and accordingly, the method further comprises:
receiving, by the POP server, the data packet carrying the outer-layer VLAN identifier and the inner-layer VLAN identifier, and stripping off the outer-layer VLAN identifier and the inner-layer VLAN identifier by means of the first interface to restore the data packet sent by the customer service server.

17. The method according to claim 13, further comprising:
receiving, by the POP server, a data packet sent from the other POP server, and adding an outer-layer VLAN identifier to the data packet received, or adding an outer-layer VLAN identifier and an inner-layer VLAN identifier, and sending the data packet with the VLAN identifiers added to the system switch.

18. A POP server, comprising a processor and a memory, wherein the memory is configured to store a computer program, and the computer program is executable by the processor, whereby the method according to any one of claims 13 to 17 is implemented.
